## Europäisches Patentamt
## European Patent Office
## Office européen des brevets

(11) Numéro de publication : **0 282 398 B1**

(12) **FASCICULE DE BREVET EUROPEEN**

(45) Date de publication du fascicule du brevet :
**11.12.91 Bulletin 91/50**

(51) Int. Cl.$^5$ : **H01Q 1/50, H02G 13/00**

(21) Numéro de dépôt : **88400478.9**

(22) Date de dépôt : **01.03.88**

(54) **Dispositif de protection contre la foudre d'une antenne radar mobile.**

(30) Priorité : **06.03.87 FR 8703070**

(43) Date de publication de la demande :
**14.09.88 Bulletin 88/37**

(45) Mention de la délivrance du brevet :
**11.12.91 Bulletin 91/50**

(84) Etats contractants désignés :
**DE GB IT NL**

(56) Documents cités :
**US-A- 2 160 053**
**US-A- 3 125 757**

(73) Titulaire : **THOMSON-CSF**
**51, Esplanade du Général de Gaulle**
**F-92800 Puteaux (FR)**

(72) Inventeur : **Deville, Geneviève**
**THOMSON-CSF SCPI 19, avenue de Messine**
**F-75008 Paris (FR)**

(74) Mandataire : **Benoit, Monique et al**
**THOMSON-CSF SCPI**
**F-92045 PARIS LA DEFENSE CEDEX 67 (FR)**

## Description

La présente invention concerne un dispositif de protection contre la foudre d'une antenne radar mobile, ce dispositif ne perturbant pas le fonctionnement de l'antenne par sa présence dans le secteur d'émission ou de réception de cette antenne.

Les antennes radar comportent des parties très vulnérables vis-à-vis de la foudre : ce sont les éléments rayonnants et les composants électroniques situés derrière ces éléments rayonnants.

Les antennes à un ou plusieurs réflecteurs sont beaucoup moins fragiles que les antennes à balayage électronique. En effet, un réflecteur est une pièce métallique, en général un grillage, insensible à la foudre, conducteur d'électricité et relié électriquement au sol : il protège partiellement les éléments rayonnants et les composants électroniques vis-à-vis de la foudre, autrement dit il joue le rôle d'un paratonnerre. Aucune partie d'une antenne à balayage électronique ne peut assumer un tel rôle.

Les antennes à balayage électronique, qui sont par ailleurs très coûteuses, doivent donc être impérativement protégées contre la foudre.

La protection d'un objet contre la foudre est ordinairement assurée par un paratonnerre, constitué d'une ou plusieurs tiges métalliques fixes, situées à proximité de l'objet à protéger, surplombant celui-ci, et reliées électriquement au sol qui permet d'évacuer des charges électriques importantes.

Malheureusement, un tel dispositif est mal adapté à la protection contre la foudre d'une antenne radar. En effet, celle-ci émet ou reçoit de l'énergie dans plusieurs secteurs de l'espace ; certaines antennes explorent en particulier toutes les directions du plan de gisement (plan horizontal). Or un paratonnerre ordinaire comporte au moins une tige métallique fixe qui surplombe l'antenne à protéger et qui est reliée électriquement au sol par au moins un élément conducteur d'électricité généralement lui aussi métallique. L'ensemble constitué de cet élément et de la tige se trouve donc inévitablement à un moment donné dans le secteur d'émission ou de réception de l'antenne, et sa présence dans ce secteur perturbe fortement le fonctionnement de l'antenne.

L'art antérieur comporte des paratonnerres escamotables que l'on fait disparaître par beau temps, et que l'on érige lorsqu'il y a menace d'orage. L'érection du paratonnerre est commandée par un détecteur d'orage, qui mesure le champ électrique et le champ magnétique de l'atmosphère environnante. Une antenne protégée par un paratonnerre de ce type fonctionne normalement par beau temps, et n'est perturbée que pendant la durée de la menace orageuse, supposée faible devant la durée du beau temps.

Un paratonnerre escamotable présente néanmoins des inconvénients ; tout d'abord, c'est un dispositif coûteux : il nécessite l'utilisation de détecteurs d'orage qui sont onéreux, ensuite, c'est un dispositif quine résout pas les problèmes posés par le paratonnerre fixe dans une région à fort niveau kéronique, c'est-à-dire où la fréquence des orages est élevée, comme par exemple dans une zone tropicale.

L'objet de la présente invention est un dispositif de protection contre la foudre d'une antenne radar mobile, autrement dit un paratonnerre d'antenne radar, qui permet d'éviter les inconvénients précédents par le fait qu'il est, d'une part disposé hors du secteur d'émission ou de réception de l'antenne, c'est-à-dire derrière cette antenne, et d'autre part qu'il est animé d'un mouvement solidaire de celui de l'antenne mobile. Il reste ainsi constamment hors du secteur d'émission ou de réception de l'antenne.

L'invention a plus précisément pour objet un dispositif de protection contre la foudre d'une antenne radar mobile comportant au moins une tige conductrice d'électricité, située à proximité de l'antenne, surplombant celle-ci, isolée électriquement de celle-ci, et connectée électriquement à des moyens d'évacuation de charge, caractérisé en ce qu'il est disposé hors du secteur d'émission ou de réception de l'antenne, qu'il est animé d'un mouvement solidaire de celui de l'antenne mobile, et qu'il reste ainsi constamment hors du secteur d'émission ou de réception de l'antenne.

Des précisions et particularités de l'invention apparaîtront au cours de la description qui suit, à l'aide des figures qui représentent :

— La figure 1, une vue de profil d'un premier mode de réalisation d'un dispositif selon l'invention, comportant une seule tige ;

— la figure 2, une vue de profil d'un second mode de réalisation d'un dispositif selon l'invention, comportant trois tiges ;

— la figure 3, une vue de dessus de la figure précédente.

Sur ces différentes figures, d'une part l'échelle réelle n'est pas respectée, et d'autre part les mêmes références se rapportent aux mêmes éléments.

L'invention concerne un dispositif de protection contre la foudre, autrement dit un paratonnerre, d'une antenne radar mobile.

Un paratonnerre ordinaire d'une antenne radar mobile est fixe, et se trouve périodiquement dans le secteur d'émission ou de réception de l'antenne. Sa présence dans ce secteur perturbe le fonctionnement de l'antenne, en modifiant son diagramme de rayonnement : le rapport de la surface du lobe principal sur celle des lobes secondaires diminue, autrement dit la directivité de l'antenne se détériore ; ce phénomène est d'autant plus important que le paratonnerre est plus au centre du champ rayonné par l'antenne.

Selon l'invention on pallie cet inconvénient en faisant en sorte que le paratonnerre reste constamment hors du secteur d'émission ou de réception de l'antenne, c'est-à-dire derrière cette antenne. Le principe de l'invention consiste donc à disposer le paratonnerre en arrière de l'antenne, et à l'animer d'un mouvement solidaire de celui de l'antenne.

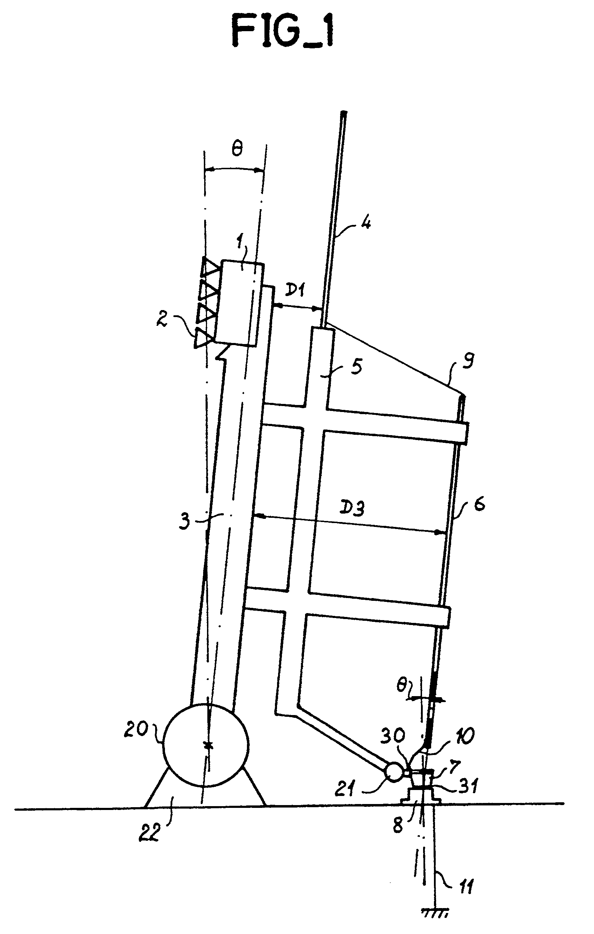

La figure 1 représente un premier mode de réalisation d'un dispositif selon l'invention. Sur cette figure est représentée une antenne 1 comportant des éléments rayonnants 2. L'antenne 1 est supportée par une tourelle 3 montée sur un socle 22. A titre d'exemple, cette antenne 1 est à balayage électronique dans le plan de site (vertical), et explore le plan de gisement (horizontal) grâce à une rotation mécanique autour d'un axe sensiblement vertical. Le dispositif de protection contre la foudre selon l'invention et protégeant l'antenne 1 mobile, comporte les éléments suivants :

— une tige 4 conductrice d'électricité, située derrière l'antenne 1, à proximité de celle-ci et surplombant celle-ci ; cette tige a une section de forme quelconque ; en pratique, la forme de la section de cette tige est choisie selon des critères de résistance mécanique d'une part, et de facilité d'usinage d'autre part ; à titre d'exemple, cette tige est un tube cylindrique ;

— une descente de foudre 6 conductrice d'électricité, de préférence rigide, cette rigidité la rendant plus solide ;

— un câble de liaison 9 conducteur d'électricité, connectant électriquement la tige 4 et la descente de foudre 6 ;

— un patin 7 conducteur d'électricité ;

— une tresse de liaison 10 connectant électriquement la descente de foudre 6 et le patin 7 ;

— un rail circulaire 8 conducteur d'électricité ;

— une tige 11 conductrice d'électricité, s'enfonçant dans le sol, et constituant des moyens d'évacuation de charges électriques importantes, lors d'un coup de foudre, de tels moyens étant connus de l'homme de l'art. Ces moyens d'évacuation de charge peuvent être constitués de plusieurs tiges 11. Sur la figure 1, pour simplifier, on a représenté une seule tige 11.

La tige 4, la descente de foudre 6, le câble de liaison 9, le patin 7, et la tresse de liaison 10, sont mobiles et sont animés d'un mouvement solidaire de celui de l'antenne 1. Un support 5 isolant électriquement, et rigide assure une liaison mécanique entre l'antenne et les cinq éléments mobiles précédemment cités. Ce support assure ainsi cette solidarité. Le rail circulaire 8, et la tige 11, sont, eux, fixes. Le patin 7 frotte sur le rail circulaire 8, ce qui assure un contact électrique permanent entre les éléments mobiles, et les éléments fixes. Le patin 7 comporte de préférence :

— une bande de frottement 31, conductrice d'électricité, par exemple en graphite, qui minimise les risques de soudure entre ledit patin 7 et le rail circulaire 8, une telle soudure risquant de se produire à cause d'un échauffement lors d'un coup de foudre ;

— un système de ressort 30 assurant un bon contact entre le patin 7 et le rail circulaire 8.

Pour éviter des claquages lors d'un coup de foudre, la tige 4 est séparée de l'antenne 1 par une distance D1 suffisamment grande. L'évaluation de cette distance D1 est accessible à l'homme de l'art. Pour la même raison la descente de foudre 6 et la tourelle 3 sont séparées d'une distance D3, estimée, elle aussi, au vu de l'art de l'antérieur.

Le dispositif, objet de la présente invention, possède une flexibilité lui permettant de ne pas être endommagé à cause du vent. Des moyens mécaniques 20 et 21, permettent à l'ensemble constitué de l'antenne 1 comportant les éléments rayonnants 2, de la tourelle 3, de la tige 4, de la descente de foudre 6, du câble de liaison 9, du patin 7, et de la tresse de liaison 10, ainsi que du support isolant 5, d'osciller légèrement sous l'effet du vent, alors que le rail circulaire 8, la tige 11 et le socle 22 de l'antenne 1 restent fixes. Cette flexibilité est schématisée sur la figure 1 par un angle θ entre la direction verticale et l'axe de la tourelle 3 supportant l'antenne 1. N'importe quels moyens mécaniques 20 et 21 assurant cette flexibilité, et appartenant à l'art antérieur, peuvent être utilisés dans le dispositif objet de l'invention. En outre, le câble de liaison 9 est de préférence flexible.

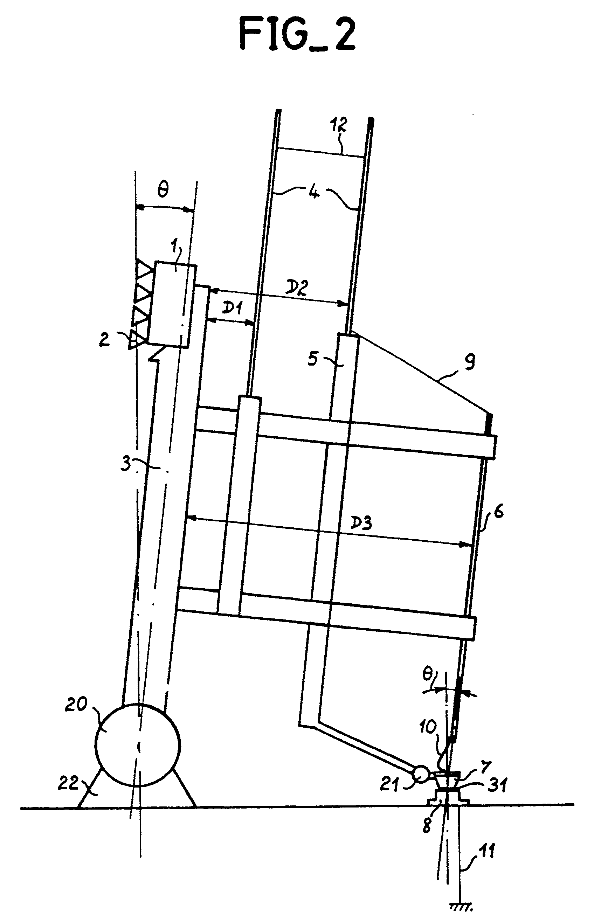

Le dispositif de protection contre la foudre d'une antenne radar mobile, schématisé sur la figure 1, ne comporte qu'une tige 4 de hauteur arbitraire. Le nombre et la hauteur des tiges 4 du dispositif objet de la présente invention sont par exemple déterminés au moyen d'un modèle dit "modèle électrogéométrique", décrit dans l'article de M. Claude GARY, intitulé "Les principes physiques guidant la protection des bâtiments contre la foudre", et publié dans la revue R.G.E., dans le tome 89, n° 5, en mai 1980. Le nombre n des descentes de foudre 6, bien évidemment identique à celui des câbles de liaison 9, à celui des patins 7, ainsi qu'à celui des tresses de liaison 10, est inférieur ou égal au nombre N des tiges 4. Dans le cas où n est strictement inférieur à N, plusieurs tiges 4 sont connectées électriquement entre elles. Un mode de réalisation d'une telle configuration est décrit dans ce qui suit et illustré par la figure 2.

La figure 2 schématise un second mode de réalisation d'un dispositif selon l'invention, vu de profil, comportant trois tiges 4, et une seule descente de foudre 6. Ces nombres de tiges 4, et de descentes de foudre 6, sont choisis à titre d'exemple. Si l'antenne 1 à protéger fait partie, par exemple, d'un radar de poursuite et non d'un radar de veille, il est important que l'inertie du dispositif de protection contre la foudre de cette antenne 1 ne soit pas trop élevée. C'est pour cela que l'on peut, de préférence, choisir un nombre de descentes de foudre 6 strictement inférieur au nombre de tiges 4. Néanmoins il faut que chaque tige 4 soit connectée électriquement à une descente de foudre 6. Sur la figure 2, une des tiges 4 est connectée électriquement à une descente de foudre 6 au moyen d'un câble de liaison 9, et les deux autres tiges 4, l'une cachant l'autre sur cette vue de profil, sont connectées à la première au moyen de câbles de liaison 12 conducteurs d'électricité, et de préférence flexibles. Les autres éléments représentés sur la figure 2 sont analogues à ceux représentés sur la figure 1.

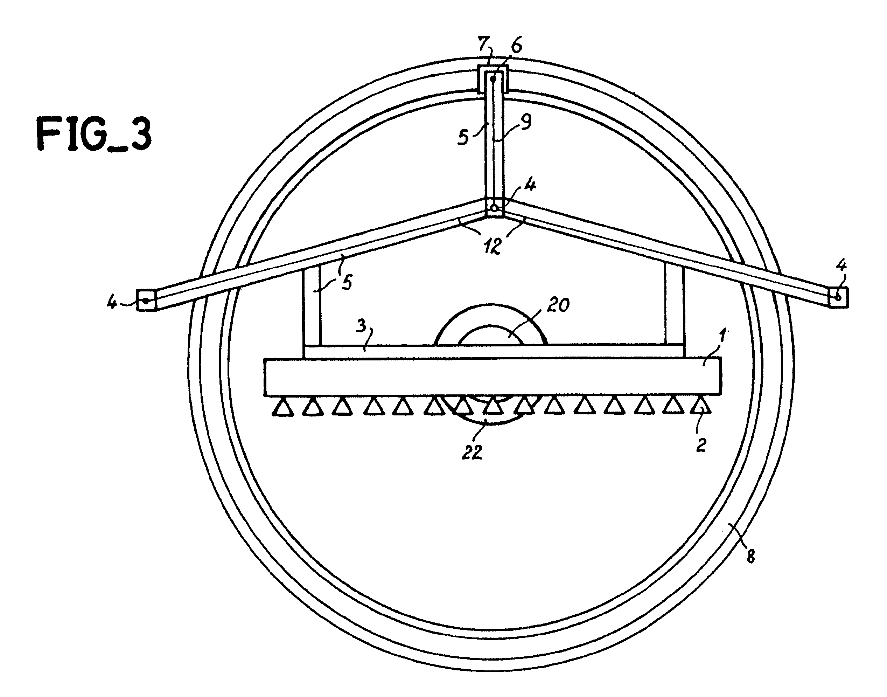

La figure 3 représente les mêmes éléments que ceux dessinés sur la figure 2, mais vus de dessus et non de profil. Pour simplifier cette figure l'angle θ a été choisi égal à zéro. Cette vue de dessus permet de mettre en évidence la forme circulaire du rail 8, ainsi que la position des trois tiges 4 situées derrière l'antenne.

Les deux modes de réalisation du dispositif selon l'invention, illustrés respectivement par les figures 1, et par les figures 2 et 3, ne comportent qu'un rail circulaire 8 conducteur d'électricité. Un dispositif selon l'invention peut comporter plusieurs rails 8 concentriques connectés électriquement entre eux, afin d'éviter des claquages lors d'un coup de foudre. Un tel mode de réalisation du dispositif selon l'invention n'a pas été illustré par une figure ; en effet, un dispositif selon l'invention comportant plusieurs rails 8, comporte nécessairement plus de descentes de foudre 6, qu'un dispositif selon l'invention ne comportant qu'un seul rail 8 ; de ce fait son inertie est plus grande, ce qui constitue un inconvénient, comme cela a été expliqué précédemment.

## Revendications

1. Antenne radar mobile comportant un dispositif de protection contre la foudre (1) comportant une tige (4) conductrice d'électricité, située à proximité de l'antenne (1), surplombant celle-ci, isolée électriquement de celle-ci, et connectée électriquement à des moyens d'évacuation de charge (11), caractérisé en ce qu'il est disposé hors du secteur d'émission ou de réception de l'antenne, qu'il est animé d'un mouvement solidaire de celui de l'antenne mobile (1), et qu'il reste ainsi constamment hors du secteur d'émission ou de réception de l'antenne (1).

2. Antenne selon la revendication 1, caractérisé en ce que la tige (4) est connectée électriquement aux moyens d'évacuation de charge (11) à l'aide :
    — d'un câble de liaison (9) conducteur d'électricité, et possédant un mouvement solidaire de celui de l'antenne (1) ;
    — d'une descente de foudre (6) conductrice d'électricité, et possédant un mouvement solidaire de celui de l'antenne (1) ;
    — d'une tresse de liaison (10) conductrice d'électricité, et possédant un mouvement solidaire de celui de l'antenne (1) ;
    — d'un patin (7) conducteur d'électricité, et possédant un mouvement solidaire de celui de l'antenne (1) ;
    — d'un rail circulaire (8) conducteur d'électricité, fixe, et connecté électriquement aux moyens d'évacuation de charges (11) ;
    le patin (7) mobile frottant sur le rail circulaire (8) fixe.

3. Antenne selon la revendication 1, caractérisé en ce que le dispositif comporte en outre un nombre non nul de tiges possédant lesdites caractéristiques de ladite tige (4), dont certaines sont connectées électriquement entre elles au moyen de câbles de liaison (12) conducteurs d'électricité, le dispositif comportant ainsi au moins un groupe de tiges (4) reliées électriquement entre elles, ce groupe étant connecté électriquement aux moyens d'évacuation de charge (11) à l'aide :
    — d'un câble de liaison (9) conducteur d'électricité, et possédant un mouvement solidaire de celui de l'antenne (1) ;
    — d'une descente de foudre (6) conductrice d'électricité, et possédant un mouvement solidaire de celui de l'antenne (1) ;
    — d'une tresse de liaison (10) conductrice d'électricité, et possédant un mouvement solidaire de celui de l'antenne (1) ;
    — d'un patin (7) conducteur d'électricité, et possédant un mouvement solidaire de celui de l'antenne (1) ;
    — d'un rail circulaire (8) conducteur d'électricité, fixe, et connecté électriquement aux moyens d'évacuation de charges (11) ;
    le patin (7) mobile frottant sur le rail circulaire (8) fixe.

4. Antenne selon l'une des revendications 2 ou 3, caractérisé en ce que le dispositif comporte en outre un système de ressorts (30) maintenant le patin (7) en contact électrique, avec le rail circulaire (8).

5. Antenne selon l'une des revendications 2 à 4, caractérisé en ce que le patin (7) comporte une bande de frottement (31) en graphite minimisant le risque de soudure, due à un échauffement lors d'un coup de foudre, entre ledit patin (7) mobile et le rail circulaire (8) fixe.

6. Antenne selon l'une des revendications 2, 4 ou 5, caractérisé en ce que le dispositif comporte en outre un support (5) rigide et isolant électriquement :
    — assurant une liaison mécanique entre l'antenne (1) et l'ensemble d'éléments du paratonnerre constitué : de la tige (4), du câble de liaison (9), de la descente de foudre (6), de la tresse de liaison (10), et du patin (7) ;
    — assurant ainsi à cet ensemble d'éléments du paratonnerre un mouvement solidaire de celui de l'antenne (1).

7. Antenne selon l'une des revendications 3, 4 ou 5, caractérisé en ce que le dispositif comporte en outre un support (5) rigide et isolant électriquement :
    — assurant une liaison mécanique entre l'antenne (1) et l'ensemble d'éléments du paratonnerre constitué : du groupe de tiges (4), du câble de liaison (9), de la descente de foudre (6), de la tresse de liaison (10), et du patin (7) ;

— assurant ainsi à cet ensemble d'éléments du paratonnerre un mouvement solidaire de celui de l'antenne (1).

8. Antenne selon l'une des revendications 2 à 7, caractérisé en ce que le dispositif comporte en outre une tourelle (3) supportant l'antenne (1) et des moyens mécaniques (20, 21) permettant audit ensemble d'éléments du paratonnerre, au support (5), à l'antenne (1), et à la tourelle (3) d'osciller légèrement sous l'effet du vent.

## Claims

1. A mobile radar antenna including a lightning protection device (1), the latter comprising an electrically conducting rod (4) which is placed near the antenna (1), projects ahead of it, is electrically insulated therefrom and is connected electrically to charge removal means (11), characterized in that the device is disposed outside the radiation sector of the antenna, that it is submitted to the same motion as the mobile antenna (1), and that it thereby remains constantly outside the radiation sector of the antenna (1).

2. An antenna according to claim 1, characterized in that the shaft (4) is electrically connected to the charge removal means (11) via

— an electrically conducting connection cable (9) submitted to the same motion as the antenna (1),
— an electrically conducting lightning down-lead (6) submitted to the same motion as the antenna (1),
— an electrically conducting stranded connection wire (10) submitted to the same motion as the antenna (1),
— an electrically conducting skid (7) submitted to the same motion as the antenna (1),
— an electrically conducting stationary circular rail (8) electrically connected to the charge removal means (11), with the mobile skid (7) sliding frictionally over the stationary circular rail (8).

3. An antenna according to claim 1, characterized in that the device further includes at least one rod presenting said characteristics of said shaft (4), certain ones of these rods being electrically interconnected by means of electrically conducting connection cables (12), the device thus comprising at least one group of electrically interconnected rods (4), said group being electrically connected to the charge removal means (11) via

— an electrically conducting connection cable (9) submitted to the same motion as the antenna (1),
— an electrically conducting lightning down-lead (6) submitted to the same motion as the antenna (1),
— an electrically conducting stranded connection wire (10) submitted to the same motion as the antenna (1),
— an electrically conducting skid (7) submitted to the same motion as the antenna (1),
— an electrically conducting stationary rail (8) electrically connected to the charge removal means (11), with the mobile skid (7) sliding frictionally over the stationary circular rail (8).

4. An antenna according to claim 2 or 3, characterized in that the device further includes a system of springs (30) keeping the skid (7) in electrical contact with the circular rail (8).

5. An antenna according to any one of claims 2 to 4, characterized in that the skid (7) comprises a friction band (31) made of graphite and allowing to minimize the risk of welding, due to a heating caused in a lightning stroke, between said mobile skid (7) and the stationary circular rail (8).

6. An antenna according to any one of claims 2, 4 or 5, characterized in that the device further includes a rigid and electrically insulating support (5), adapted to :

— ensure a mechanical link between the antenna (1) and the lightning arrester assembly constituted of the rod (4), the connection cable (9), the lightning down-lead (6), the stranded connection wire (10) and the skid (7),
— ensure thus the same motion of said lightning arrester assembly as the antenna.

7. An antenna according to any one of claims 3, 4 or 5, characterized in that the device further includes a rigid and electrically insulating support (5), adapted to :

— ensure a mechanical link between the antenna (1) and the lightning arrester assembly constituted of the group of rods (4), the connection cable (9), the lightning down-lead (6), the stranded connection wire (10) and the skid (7),
— thus ensuring the same motion of said lightning arester assembly as the antenna.

8. An antenna according to any one of claims 2 to 7, characterized in that the device further includes a tower (3) supporting the antenna (1), and mechanical means (20, 21) allowing said lightning arrester assembly, said support (5), said antenna (1) and said tower (3) to slightly oscillate under the impact of wind.

## Patentansprüche

1. Mobile Radarantenne mit einer Blitzschutzeinrichtung (1), die eine elektrisch leitende Stange (4) aufweist, welche in der Nähe der Antenne (1) angeordnet ist, diese überragt, gegen sie elektrisch isoliert ist und an elektrische Mittel (11) zur Abführung der Ladung angeschlossen ist, dadurch gekennzeichnet, daß die Einrichtung außerhalb des Sende- bzw. des Empfangssektors der Antenne angeordnet ist, daß sie genauso wie die Antenne (1) bewegt wird, und daß sie somit dauernd außerhalb des Sende- bzw. Empfangssektors der Antenne (1) bleibt.

2. Antenne nach Anspruch 1, dadurch gekennzeichnet, daß die Stange (4) an die Mittel (11) zur Abführung der Ladung elektrisch durch folgende Mittel angeschlossen ist

— ein elektrisch leitendes Verbindungskabel (9), das eine Bewegung gleich der der Antenne (1) ausführt,

— einen elektrisch leitenden Blitzableiter (6), der eine Bewegung wie die der Antenne (1) ausführt,

— eine elektrisch leitende Verbindungslitze (10), die eine Bewegung wie die der Antenne (1) ausführt,

— eine elektrisch leitende Kufe (7), die eine Bewegung wie die der Antenne (1) ausführt,

— eine elektrisch leitende ortsfeste und kreisförmige Schiene (8), die elektrisch mit den Mitteln (11) zum Abführen der Ladung verbunden ist, wobei die bewegliche Kufe (7) reibend auf der ortsfesten und kreisförmigen Schiene (8) gleitet.

3. Antenne nach Anspruch 1, dadurch gekennzeichnet, daß die Einrichtung weiter mindestens eine Stange mit den Eigenschaften der genannten Stange (4) aufweist, wobei bestimme Stangen mit Hilfe von elektrisch leitenden Verbindungskabeln (12) elektrisch miteinander verbunden sind, wobei die Einrichtung dementsprechend mindestens eine Gruppe elektrisch miteinander verbundener Stangen (4) aufweist, und wobei die Gruppe an die Mittel (11) zur Abführung der Ladung durch folgende Mittel angeschlossen ist :

— ein elektrisch leitendes Verbindungskabel (9), das eine Bewegung gleich der der Antenne (1) ausführt,

— einen elektrisch leitenden Blitzableiter (6), der eine Bewegung gleich der der Antenne (1) ausführt,

— eine elektrisch leitende Verbindungslitze (10), die eine Bewegung gleich der der Antenne (1) ausführt,

— eine elektrisch leitende Kufe (7), die eine Bewegung gleich der der Antenne (1) ausführt,

— eine elektrisch leitende ortsfeste und kreisförmige Schiene (8), die elektrisch mit den Mitteln (11) zum Abführen der Ladung verbunden ist, wobei die bewegliche Kufe (7) reibend auf der ortsfesten und kreisförmigen Schiene (8) gleitet.

4. Antenne nach einem der Ansprüche 2 oder 3, dadurch gekennzeichnet, daß die Einrichtung weiter ein Federsystem (30) aufweist, das die Kufe (7) in elektrischem Kontakt mit der kreisförmigen Schiene (8) hält.

5. Antenne nach einem der Ansprüche 2 bis 4, dadurch gekennzeichnet, daß die Kufe (7) ein Reibband (31) aus Graphit aufweist, das die Verschweißungsgefahr aufgrund einer beim Blitzschlag auftretenden Erwärmung zwischen der beweglichen Kufe (7) und der ortsfesten und kreisförmigen Schiene (8) minimiert.

6. Antenne nach einem der Ansprüche 2, 4 oder 5, dadurch gekennzeichnet, daß die Einrichtung weiter eine elektrisch isolierende, starre Stütze (5) aufweist,

— um eine mechanische Verbindung zwischen der Antenne (1) und der Gesamtheit der Blitzableiterelemente herzustellen, die aus der Stange (4), dem Verbindungskabel (9), dem Blitzableiter (6), der Verbindungslitze (10) und der Kufe (7) bestehen, und

— um somit dieser Gesamtheit der Blitzableiterelemente eine Bewegung zu verleihen, die derjenigen der Antenne (1) gleicht.

7. Antenne nach einem der Ansprüche 3, 4 oder 5, dadurch gekennzeichnet, daß die Einrichtung weiter eine elektrisch isolierende, starre Stütze (5) aufweist,

— um eine mechanische Verbindung zwischen der Antenne (1) und der Gesamtheit der Blitzableiterelemente herzustellen, die aus der Gruppe der Stäbe (4), dem Verbindungskabel (9), dem Blitzableiter (6), der Verbindungslitze (10) und der Kufe (7) bestehen, und

— um somit dieser Gesamtheit der Blitzableiterelemente eine Bewegung zu verleihen, die derjenigen der Antenne (1) gleicht.

8. Antenne nach einem der Ansprüche 2 bis 7, dadurch gekennzeichnet, daß die Einrichtung weiter einen Turm (3) als Träger der Antenne (1) sowie mechanische Mittel (20, 21) aufweist, die es der Gesamtheit der Blitzableiterelemente, der Stütze (5), der Antenne (1) und dem Turm (3) ermöglicht, unter der Einwirkung des Windes leicht zu schwingen.

# FIG_1

# FIG_2

FIG_3

EP 0 282 398 B1